(19) Europäisches Patentamt
European Patent Office
Office européen des brevets

(11) **EP 2 457 314 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(21) Anmeldenummer: **10728695.7**

(22) Anmeldetag: **07.07.2010**

(51) Int Cl.:
*H02M 1/42* (2007.01)    *H02M 3/156* (2006.01)
*H05B 37/00* (2006.01)

(86) Internationale Anmeldenummer:
**PCT/EP2010/059685**

(87) Internationale Veröffentlichungsnummer:
**WO 2011/009717 (27.01.2011 Gazette 2011/04)**

(54) **VERFAHREN UND SCHALTUNG ZUR LEISTUNGSFAKTOR-KORREKTUR**

METHOD AND CIRCUIT FOR POWER FACTOR CORRECTION

PROCÉDÉ ET CIRCUIT POUR L'AMÉLIORATION DE FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 DE 102009034350**

(43) Veröffentlichungstag der Anmeldung:
**30.05.2012 Patentblatt 2012/22**

(73) Patentinhaber: **Tridonic GmbH & Co KG**
**6851 Dornbirn (AT)**

(72) Erfinder: **KELLY, Jamie**
**Tyne and Wear NE 29 8AH (GB)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**WO-A2-2007/121944        WO-A2-2007/121945**
**DE-A1-102004 025 597**

- **INFINEON TECHNOLOGIES: "ICs for Consumer Electronics - Controller for Switch Mode Power Supplies Supporting Low Power Standby and Power Factor Correction, TDA16846/TDA 16847, Data Sheet", 20000114, [Online] Nr. TDA 16846/ TDA 16847, 14. Januar 2000 (2000-01-14), Seiten 1-28, XP002505677, Gefunden im Internet: URL:http://pdf1.alldatasheet.com/datasheet -pdf/view/82042/INFINEON/TDA168 46.html> [gefunden am 2011-05-12]**
- **"LF 198/LF298/LF398, LF 198A/LF398A Monolithic Sample-and -Hold circuits", National Semiconductor Corporation , Juli 2000 (2000-07), Seiten 1-13, XP002636561, Gefunden im Internet: URL:http://pdf1.alldatasheet.com/datasheet -pdf/view/8575/NSC/LF198.html [gefunden am 2011-05-12]**

EP 2 457 314 B1

**Beschreibung**

Die vorliegende Erfindung bezieht sich auf ein Verfahren sowie eine Vorrichtung zur aktiven Leistungsfaktorkorrektur (PFC, Power Factor Correction), d.h. mittels eines aktiv von einer PFC-Steuereinheit getakteten Schalters.

Das technische Gebiet der vorliegenden Erfindung ist insbesondere das der Leistungsfaktorkorrektur bei Wechselspannungs-/Gleichspannungs-Leistungswandler.

Durch eine Leistungsfaktorkorrektur wird die Art beeinflusst, wie elektrische Geräte Strom dem Stromnetz entnehmen. Die Netzwechselspannung weist bekanntlich einen sinusförmigen Zeitverlauf auf. Idealerweise sollte daher auch der vom Netz entnommene Strom ebenfalls einen sinusförmigen Zeitverlauf aufweisen. Dieser Idealfall kommt aber nicht immer vor, vielmehr kann der Strom sogar erheblich von einer Sinus-Hüllkurve abweichen. Falls der entnommene Strom nicht sinusförmig ist, werden indessen Oberwellen im Netzstrom erzeugt. Diese Oberwellenströme im Versorgungsnetz sollen mit Hilfe einer Leistungsfaktorkorrektur-Schaltung verringert werden.

Nach der DE 10 2004 025 597 A1 ist eine Schaltung zur Leistungsfaktorkorrektur bekannt, bei der die Induktivität wiederholt mittels eines durch eine PFC-Steuereinheit getakteten Schalters durch Schließen und Öffnen desselben ge- und entladen wird, und bei der der Entladestrom der Induktivität über eine Diode (D) dem Ausgang des Wandlers zugeführt wird. Die als ASIC ausgeführte PFC-Steuereinheit weist nur zwei PINs auf. Über einen der PINs werden Steuersignale ausgegeben und an dem anderen PIN werden Parameter überwacht, die zur Bemessung der Ein- und Ausschaltzeit für den Schalter notwendig sind. Dabei erfolgt das Wiedereinschalten des Schalters am Ende einer Ausschaltzeit dann, wenn der Entladestrom durch die Induktivität die Nulllinie erreicht hat. Dieser Zeitpunkt wird durch Überwachung der Spannung an der Hochpotentialseite des Schalters ermittelt und mittels eines Spannungsteilers gemessen, der parallel zum Schalter liegt. Der Abgriffspunkt des Spannungsteilers bildet einen - und zwar den einzigen - Überwachungspunkt, der mit dem Überwachungs-PIN verbunden ist. Die überwachte Spannung knickt in ihrem zeitlichen Verlauf nach unten ab, wenn der Entladestrom die Nulllinie erreicht. Dieses Ereignis wird nachfolgend ZCD-Ereignis (zero crossing detection) genannt.

Bei dem bekannten Verfahren bzw. der bekannten Schaltung kann also über den Überwachungspunkt bei geöffnetem Schalter die Ausgangsgleichspannung beobachtet werden. Die Ausgangsgleichspannung kann jedoch nur solange überwacht werden, wie noch Strom durch die Diode fließt. Wenn die Eingangswechselspannung, d.h. die gleichgerichtete und - soweit wie möglich - geglättete Netzspannung, die aber immer noch aus aufeinanderfolgenden Sinushalbwellen gleicher Polarität besteht, einen relativ geringen mittleren Amplitudenwert hat, oder wenn die Last gering ist, so kann der Zeitabschnitt, innerhalb dessen die Diode leitend ist, sehr kurz sein, mit der Folge, dass die Ausgangsgleichspannung nur unzureichend abgetastet (sampled) werden kann.

Schaltungen zur Leistungsfaktorkorrektur des hier betrachteten Typs werden normalerweise geregelt, indem die Einschaltzeit $T_{ON}$ verändert wird. Bei einer vorgegebenen Last ist $T_{ON}$ theoretisch über den gesamten Winkelbereich von 180 Grad einer Netzhalbwelle konstant. Wenn die Last jedoch reduziert wird, muss auch $T_{ON}$ entsprechend reduziert werden. Sogar dann, wenn die Ausgangsgleichspannung $V_{BUS}$ unmittelbar überwacht wird, ist der Regelbereich infolge der oben erwähnten zeitlich sehr kurzen Tastimpulse beschränkt. Bei solchen Niederlast-Verhältnissen ist man deshalb bisweilen dazu übergegangen, dass man die Leistungskorrektur-Schaltung insgesamt ausgeschaltet hat, wenn $V_{BUS}$ eine obere Spannungsschwelle überschreitet, und wieder einschaltet, wenn $V_{BUS}$ eine untere Spannungsschwelle überschreitet. Mit einer derartigen Hysteresis-Regelung kann jedoch die angestrebte Sinus-Form des Eingangsstromes nicht beibehalten werden.

Der Erfindung liegt deshalb die Aufgabe zugrunde, für ein Verfahren zur Leistungsfaktorkorrektur der hier betrachteten Art sowie für die entsprechende Schaltung Möglichkeiten anzugeben, um auch bei geringer Eingangswechselspannung und/oder bei Niederlast-Bedingungen zuverlässige Abtastwerte zu generieren und dadurch eine kontinuierliche Regelung der Ausgangsgleichspannung zu gewährleisten.

Die Aufgabe ist für das Verfahren durch die Merkmale des Anspruches 1 und für die Schaltung durch die Merkmale des Anspruches 7 gelöst.

Ausgestaltungen der erfindungsgemäßen Lösungen sind Gegenstand der abhängigen Ansprüche. Dabei sollen zur Vermeidung von Wiederholungen die Ansprüche in vollem Umfang zum Offenbarungsgehalt der Beschreibung zählen.

Ausführungsbeispiele werden nachfolgend anhand der Zeichnungen beschrieben.

Es zeigen:

Figur 1     ein schematisiertes Schaltbild einer Schaltung zur Leistungsfaktor-Korrektur in einem Wechselspannungs-/Gleichspannungs-Leistungswandler;

Figur 2     die Abhängigkeit der Ausschaltzeit $T_{OFF}$ von der Phase einer Sinushalbwelle der gleichgerichteten Eingangswechselspannung $V_{IN}$ i

Figur 3    eine grafische Darstellung des durch die Induktivität L fließenden Stromes $I_L$ in Abhängigkeit von der Zeit t mit drei unterschiedlichen ZCD-Ereignissen;

Figur 4    (a)-(c) drei Oszillogramme mit einer Simulation über den zeitlichen Verlauf des Eingangsstromes $I_{IN}$ bei unterschiedlichen Parametern;

Figur 5    eine grafische Darstellung des durch die Induktivität L fließenden Stromes $I_L$ in Abhängigkeit von der Zeit t in anderer Betrachtungsweise als in Figur 3;

Figur 6    (a)-(d) vier Oszillogramme einer Simulation mit dem zeitlichen Verlauf des Eingangsstromes $I_{IN}$ mit anderen unterschiedlichen Parametern als in Figur 5;

Figur 7    (a) und (b) eine Schaltungsanordnung von zwei in Serie geschalteten Sample & Hold-Schaltungen zur Ermittelung von $V_{BUS}$ mit den entsprechenden Pulsdiagrammen;

Figur 8    zwei Diagramme, von denen das eine den zeitlichen Verlauf der tatsächlichen überwachten Spannung $V_{BUS}$ und das andere den zeitlichen Verlauf der getasteten (sampled) Ausgangsgleichspannung $V_{BUS}$ zeigt;

Figur 9    eine vereinfachte Darstellung des PFC-ASIC aus Figur 1.

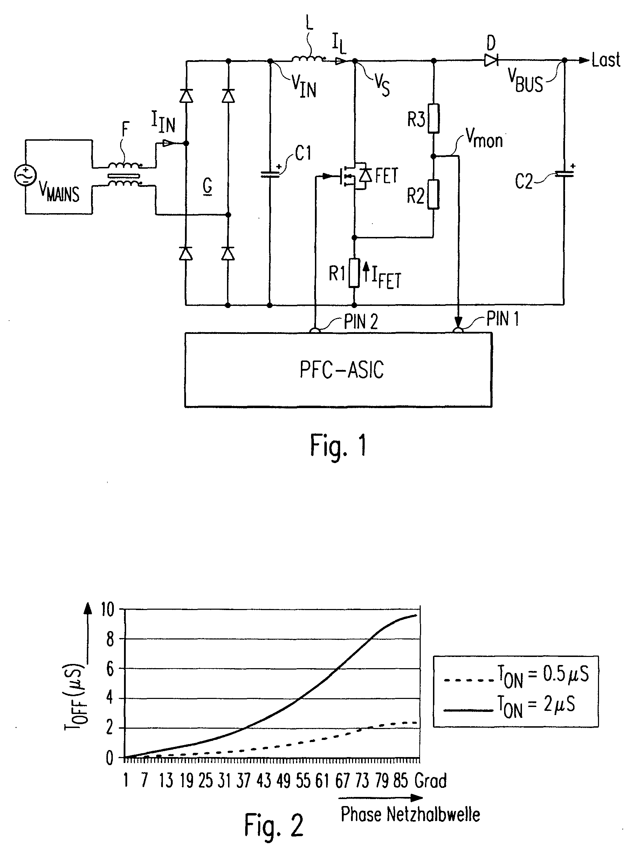

Die in **Figur 1** gezeigte Schaltung zur Leistungsfaktorkorrektur wird vom Netz mit der sinusförmigen Netzspannung $V_{MAINS}$ versorgt. Diese wird - nachdem sie ein passives Hochfrequenzfilter F passiert hat - einem Brückengleichrichter G zugeführt. Dadurch entsteht an dem Eingangskondensator C1 eine Spannung, die aus Sinushalbwellen gleicher Polarität besteht. Obwohl man sie auch als mehr oder weniger stark wellige Eingangsgleichspannung bezeichnen könnte, wird sie nachfolgende gerade wegen ihrer Welligkeit und der Notwendigkeit den Eingangsstrom an ihre Kurvenform anzupassen, als (gleichgerichtete) Eingangswechselspannung $V_{IN}$ bezeichnet.

Grundsätzlich kann die PFC-Schaltung auch ausgehend von einer DC-Spannung anstelle der Netz-Wechselspannung versorgt sein, wie es bspw. bei Notlichtgeräten der Fall ist.

Die Eingangsspannung $V_{IN}$ wird einer Serienschaltung aus einer Induktivität L, einem elektronischen Schalter in Form eines FET und einem Shunt-Widerstand R1 zugeführt. Durch wiederholtes Schließen und Öffnen des Schalters bzw. dadurch dass der FET in ständiger Wiederholung getaktet wird, wird die Induktivität L entsprechend ge- und entladen. Der in den einzelnen Phasen durch die Induktivität fließende Strom ist mit $I_L$ bezeichnet.

Die Induktivität L ist über eine Diode D mit dem Ausgang der Schaltung verbunden, der durch die Ausgangskapazität C2 repräsentiert ist. Über dem Ausgang liegt die Last.

Parallel zum FET liegt eine Serienschaltung von zwei Widerständen R2, R3, die zusätzlich mit einem Shuntwiderstand R1 in Serie geschaltet sind. Der Shuntwiderstand R1 ist außerdem mit dem FET in Serie geschaltet und hat einen sehr viel kleineren Widerstandswert als R2 und R3. Der Verbindungspunkt zwischen den beiden größeren Widerständen R2 und R3 ist ein gemeinsamer Messpunkt mit dem Potential von der Schaltung für die zur Steuerung notwendigen Parameter. Dieser gemeinsame Messpunkt ist mit dem einzigen Überwachungs-PIN PIN 1 einer als ASIC ausgeführten Steuereinheit PFC verbunden. Der ASIC weist noch einen zweiten PIN auf, der als PIN 2 bezeichnet ist und der Ausgabe von Steuerbefehlen dient. Im vorliegenden Fall ist PIN 2 mit dem Gate des FET verbunden und führt diesem die Taktsignale zu, also die Befehle zu schließen oder zu öffnen.

Wenn der FET leitend ist, wird die Induktivität magnetisch geladen. Der Ladestrom $I_L$ fließt dann über den FET und den Shuntwiderstand R1 nach Masse, mit der Folge, dass der Spannungsabfall an R1 ein Maß für den Ladestrom und damit auch für den durch den FET fließenden Strom $I_{FET}$ ist. Dieser Spannungsabfall wird während der Lade-Phase zur Überstrom-Überwachung sowie zur Berechnung der Eingangswechselspannung $V_{IN}$ ausgenutzt. Während der Ladephase schließt der eingeschaltete FET die Serienschaltung der Widerstände R2, R3 kurz, so dass $V_{mon}$ an PIN 1 ein Maß für den durch den FET fließenden Strom $I_{FET}$ ist. $V_{mon}$ entspricht der Spannung bzw. dem Potential an dem Knoten zwischen den in Serie geschalteten Widerständen R2 und R3 (siehe Fig. 1).

Wenn der FET ausgeschaltet ist, fließt der Entladestrom $I_L$ über die Diode D an die Last. Die Diode D ist während der Entladephase leitend und hat dementsprechend einen sehr geringen Widerstand. Dennoch unterscheiden sich die Ausgangsgleichspannung $V_{BUS}$ und die über dem FET vor der Diode D abfallende Spannung $V_S$ geringfügig um den Spannungsabfall über der leitenden Diode D. Der Spannungsunterschied zwischen $V_{BUS}$ und Vs wird erst dann signifikant, wenn sich der Entladestrom $I_L$ der Nulllinie nähert bzw. diese kreuzt. Bei diesem ZCD-Ereignis zeigt Vs einen nach unten gerichteten Spannungsknick, während $V_{BUS}$ praktisch unverändert bleibt. Die an PIN 1 während der Entladephase anliegende Spannung $V_{mon}$ ist ein Maß für die über der Serienschaltung der Widerstände R1, R2, R3 abfallenden

Spannung Vs. $V_{mon}$ repräsentiert also während des größten Teils der Entladephase die Ausgangsgleichspannung $V_{BUS}$ und erlaubt es am Ende der Entladephase ein ZCD-Ereignis zu detektieren.

$V_{BUS}$ ist der Wert, der mittels Regelung konstant gehalten werden soll. Er muss daher als Istwert nicht nur während der Entladephase sondern auch während der Ladephase in digitaler Form zur Verfügung stehen. Da aber eine Messung nur in der Entladephase möglich ist, wird $V_{BUS}$ während der Entladephase von dem PFC-ASIC abgetastet (sampled), in einen entsprechenden Digitalwert umgewandelt und gespeichert.

Für eine effektive Überwachung von $V_{BUS}$ muss die Ausschaltzeit $T_{OFF}$ lang genug zum Abtasten (sampling) sein. **Figur 2** zeigt die Ausschaltzeit $T_{OFF}$ als Funktion des Phasenwinkels einer Sinushalbwelle der Eingangswechselspannung $V_{IN}$, die eine Frequenz von 100 Hz hat. Dabei soll die Amplitude der Eingangsspannung $V_{IN}$ (entsprechend der Netzspannung) einen Spitzenwert von 230 V und die Ausgangsgleichspannung $V_{BUS}$ einen Mittelwert von 400 V haben. Bei einer niedrigeren Eingangsspannung $V_{IN}$ oder einer höheren Ausgangsgleichspannung $V_{BUS}$ wird die Ausschaltzeit weiter reduziert. Ein größerer Phasenwinkel bedeutet eine höhere Eingangsspannung $V_{IN}$.

Um $V_{BUS}$ zufriedenstellend abtasten zu können, wird von einer minimalen Ausschaltzeit $T_{OFF}$ von $2\mu S$ ausgegangen. Damit würde $1\mu S$ verbleiben, innerhalb der die FET-Drain-Spannung den Spannungswert von $V_{BUS}$ erreicht und diesen annehmen kann. Aus **Figur 2** geht klar hervor, dass $V_{BUS}$ - Abtastwerte nicht über den gesamten Phasenwinkelbereich erzeugt werden können. Wenn die Erzeugung von Abtastwerte jedoch zumindest über einen beachtlichen Teil des Phasenwinkelbereiches möglich ist, so ist das ausreichend, um $V_{BUS}$ zu regeln. Wenn $T_{ON} = 0,5\mu S$ ist, so liegt $T_{OFF}$ nur in einem sehr geringen Teil des Phasenwinkelbereiches oberhalb von $2\mu S$. Wenn dagegen $T_{ON} = 2\mu S$ ist, so liegt $T_{OFF}$ über nahezu 60% des Phasenwinkelbereiches über $2\mu S$. Damit wird als erstes das Problem offenbar, wie unter Niederlast-Bedingungen (die ein niedriges $T_{ON}$ zur Folge haben) eine Regelung über einen ausreichend großen Teil des Phasenwinkelbereiches möglich gemacht werden kann. Als zweites Problem ergibt sich, wie garantiert werden kann, dass von $V_{BUS}$ genommene Abtastwerte als zuverlässig betrachtet werden können.

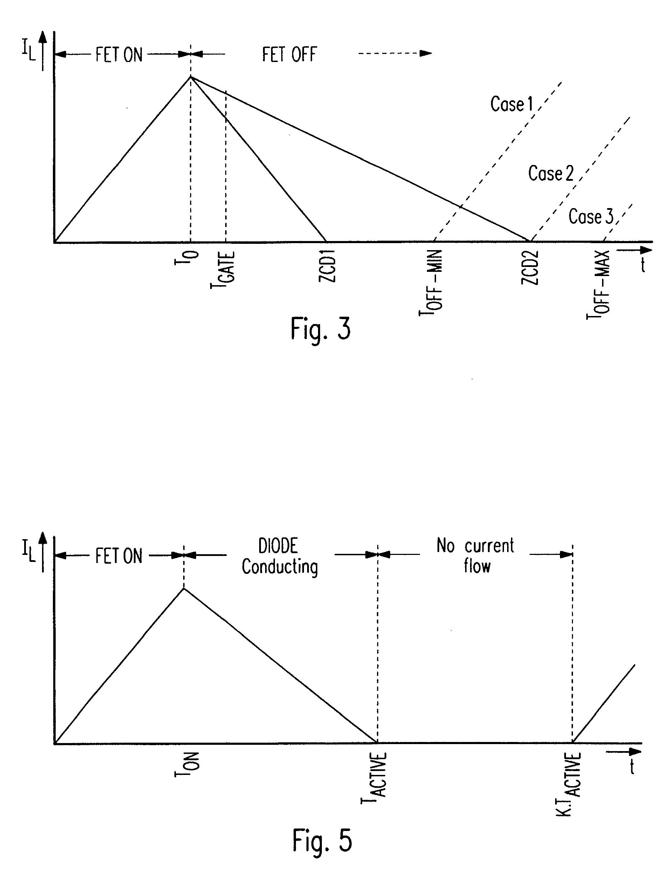

Eine Lösung des ersten Problems soll nachfolgend anhand von **Figur 3** erläutert werden. Die Lösung besteht darin, die Ausschaltzeit $T_{OFF}$ über den Zeitpunkt hinaus auszudehnen, an dem die Diode D aufhört, leitend zu sein. Das bedeutet beispielsweise, dass - selbst dann, wenn $T_{OFF}$ auf einen Zeitbereich von nur 2-2,5 $\mu S$ beschränkt wird - der gesamte für die Regelung zur Verfügung stehende Zeitbereich viel größer sein kann.

In **Figur 3** sind alle Zeiten auf $T_0$ bezogen, jenen Zeitpunkt, an dem der FET ausschaltet, also nichtleitend wird. Innerhalb des durch $T_0$ und $T_{GATE}$ begrenzten Zeitraumes kann der FET nicht wieder einschalten, d.h. leitend werden. Damit soll vermieden werden, dass der FET durch eine Störung wieder eingeschaltet wird, die durch das Ausschalten des FET verursacht worden ist. $T_{GATE}$ kann also als Störunterdrückungszeit bezeichnet werden und muss so lang gewählt werden, dass ein Fehltriggern vermieden wird, und kurz genug, um zuverlässige Triggersignale detektieren zu können, insbesondere wenn diese nahe dem ZCD-Kreuzungspunkt genommen werden, bei dem der Entladestrom die Nulllinie berührt bzw. kreuzt. Wenn ein zuverlässiges Triggersignal innerhalb den von $T_{GATE}$ begrenzten Zeitbereich fällt, so soll der FET nicht bis zum Zeitpunkt $T_{OFF-MAX}$ wieder einschalten. Für die nachfolgend noch erläuterte Simulation wurde für $T_{GATE}$ ein Wert von $0,5\mu S$ angesetzt.

Wenn ein Ereignis ZCD1 vor Ablauf von $T_{OFF-MIN}$ detektiert wird (Case1), so soll der FET nicht unverzüglich wieder eingeschaltet werden. Stattdessen soll die Regelschaltung bis $T_{OFF-MIN}$ warten und dann erst den FET wieder einschalten.

Wenn kein ZCD-Ereignis detektiert wird, bevor $T_{OFF-MIN}$ erreicht ist (Case2), so soll der FET nicht wieder eingeschaltet werden. Die Schaltung soll dann weiterarbeiten bis zum Zeitpunkt ZCD2 ein ZCD-Ereignis detektiert wird. Dann soll der FET unverzüglich wieder eingeschaltet werden.

Wenn nach $T_{OFF-MIN}$ auch weiterhin kein ZCD-Ereignis detektiert wird, so soll der FET zum Zeitpunkt $T_{OFF-MAX}$ wieder eingeschaltet werden (Case3). Dadurch wird gewährleistet, dass der PFC nicht aufhört zu arbeiten. Für $T_{OFF-MAX}$ wurde in der noch zu erläuternden Simulation ein Wert von $150\mu S$ angesetzt.

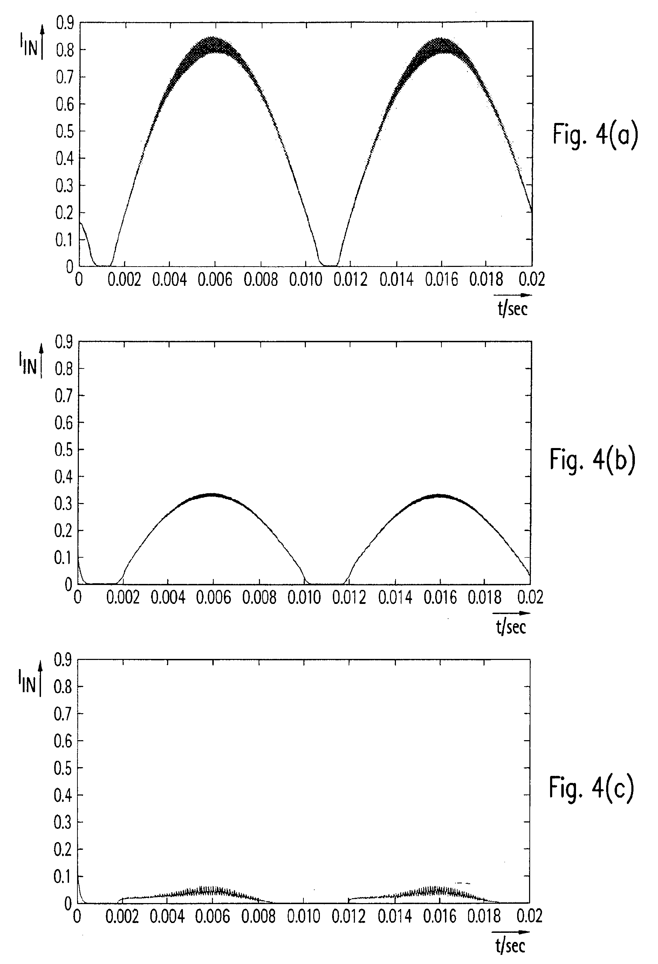

Die in **Figur 4** gezeigten zeitlichen Verläufe von Eingangsströmen $I_{IN}$ für verschiedene Lastverhältnisse sind mit einem Simulator erstellt worden, zu dem hier aus Gründen der Vereinfachung nur folgendes bemerkt werden soll. Der Simulator ist mit dem Überwachungspunkt zwischen den Widerständen R2 und R3 in **Figur 1** verbunden und enthält einen ZCD-Detektor und einen ÜberstromDetektor. Beide werten die an dem Überwachungspunkt anstehende Spannung $V_{mon}$ aus. Ferner ist der Simulator mit zwei Steuereingängen verbunden. An dem einen kann $T_{ON}$ und an dem anderen kann $T_{OFF-MIN}$ eingestellt werden. $T_{ON}$ wird über einen begrenzten Bereich variiert, um sicher zu stellen, dass $V_{BUS}$ wirksam getastet werden kann. $T_{OFF-MIN}$ wird erhöht, wenn die Last niedrig ist. Der Variationsbereich von $T_{OFF-MIN}$ liegt zwischen $1-150\mu S$.

Die drei Simulationsergebnisse in **Figur 4** zeigen den Eingangsstrom $I_{IN}$ bei drei verschiedenen Lasten über einen Variationsbereich von etwa 20:1. Man erkennt, dass die Regelung über dem gesamten Bereich wirksam ist, denn alle drei dargestellten Eingangsströme $I_{IN}$ bilden eine Sinusform nach. Dies ist möglich, ohne dass der PFC-Betrieb bei Niederlast-Bedingungen ausgeschaltet werden muss. Mit einem System, bei dem nur $T_{ON}$ als Stellwert verändert wird, wäre ein solches Ergebnis kaum zu erzielen.

Bei dem vorstehend beschriebenen Regelsystem besteht allerdings die Gefahr, dass Störungen in der Wellenform des Stromes $I_L$ auftreten, wenn $T_{OFF-MIN}$ erhöht wird. Wie nachfolgend gezeigt wird, muss das nicht der Fall sein.

In **Figur 5** ist ein Zeitpunkt $T_{ACTIVE}$ dargestellt, der das Ende des Zeitabschnittes definiert, in dem die Diode D leitend ist. Ferner ist dort ein Zeitpunkt $K \cdot T_{ACTIVE}$ mit K>1 angegeben, der das Ende eines Zeitabschnittes definiert, der einen kleineren Zeitabschnitt umfasst, in dem weder Strom durch die Diode D noch durch den FET fließt.

Der Mittelwert $I_{AV}$ des Stromes $I_L$ während des durch $K \cdot T_{ACTIVE}$ definierten Zeitabschnittes ist, wobei $I_{PEAK}$ der Spitzenstrom des Stromes $I_L$ ist:

$$I_{AV} = I_{PEAK} / 2 \cdot K$$

Durch Beibehalten von K als konstanten Faktor über den $2 \cdot 90$ Grad-Phasenbereich der Eingangswechselspannung kann der Mittelwert des Stromes $I_{AV}$ reduziert werden, ohne dass irgendeine Störung in der Wellenform des Stromes auftritt. $T_{OFF-MIN}$ ist jetzt variabel und wird wie folgt berechnet:

$$T_{OFF-MIN} = K \cdot T_{ACTIVE} - T_{ON}$$

Da $T_{ACTIVE}$ gemessen werden kann und $T_{ON}$ bekannt ist, kann $T_{OFF-MIN}$ einfach berechnet werden. Es ist möglich, die Berechnung innerhalb des aktuellen Taktes durchzuführen, wobei der Berechnungsvorgang durch ein ZCD-Ereignis beendet und das Ergebnis innerhalb einiger folgender Takte in den Regelvorgang eingeführt wird.

Alternativ dazu kann eine innerhalb eines vergangenen Taktes erfolgte Messung während des aktuellen Taktes für eine Berechnung herangezogen werden, wenn dadurch mehr Zeit zur Verfügung steht.

Insgesamt kann der Eingangswechselstrom $I_{IN}$ nach folgender Formel berechnet werden:

$$I_{IN} = (V_{IN} / 2 \cdot L) \cdot (T_{ON} / K)$$

Idealerweise sollte die Regelung nur mit einer Variablen erfolgen. Die folgenden Gleichungen zeigen, wie $T_{ON}$ und K über eine neu eingeführte einzige Variable $X_{FB}$ verknüpft werden können:

Zunächst sei vorausgesetzt, dass

$$0 </= X_{FB} </= 1$$

$$T_{MIN} </= T_{ON} </= T_{MAX}$$

$$1 </= K </= K_{MAX}$$

ist.

Dann ist

$$T_{ON} = T_{MAX} \cdot X_{FB}$$

und

$$K = 1 \text{ für } (T_{MIN} / T_{MAX}) </= X_{FB} </= 1$$

Ferner ist dann

$$T_{ON} = T_{MIN}$$

und

$$K = (T_{MIN}/T_{MAX}) \cdot (1/X_{FB}) \quad \text{für} \quad X_{FB} < (T_{MIN}/T_{MAX})$$

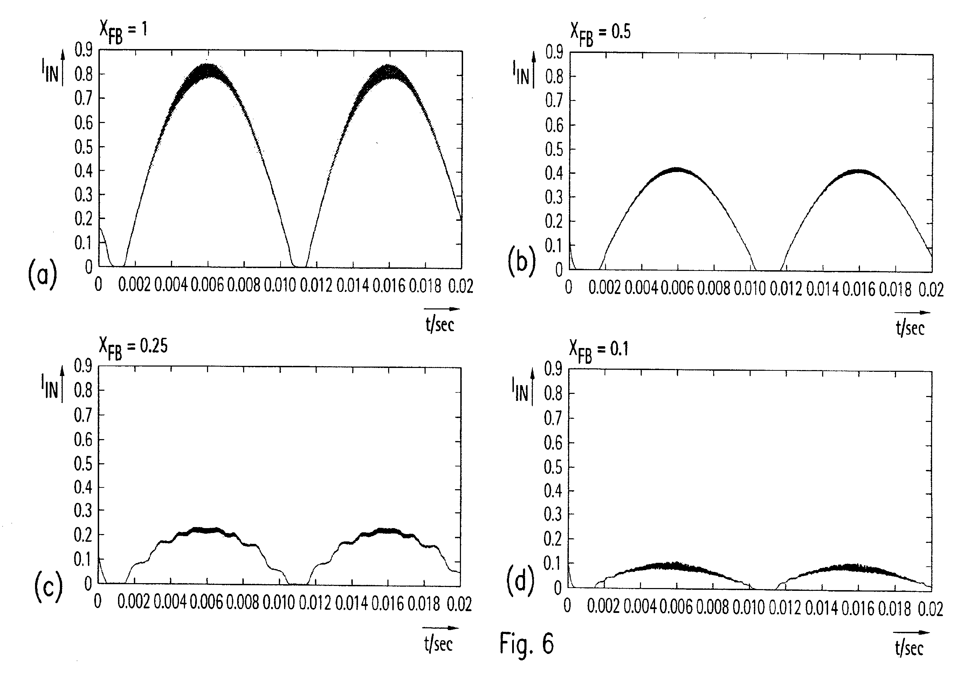

**Figur 6** zeigt die simulierten Wellenformen des Eingangsstromes $I_{IN}$ in Abhängigkeit von der Zeit t für einen PFC-Regler, wobei der Stellbereich für $T_{ON}$ 2-5μS beträgt und $K_{MAX}$ auf den Wert 15 begrenzt ist. Eine Verminderung von $X_{FB}$ auf Null führt nicht dazu, dass die Leistung auf Null reduziert wird, da die Limits für K und $T_{OFF-MAX}$ wirksam werden. Ein Gesamtbereich von 30:1 ist möglich, wenn K auf 15 und $T_{OFF-MAX}$ auf 150μS begrenzt werden.

Oben wurde darauf hingewiesen, wie wichtig es ist, zuverlässige Messwerte der Ausgangsgleichspannung $V_{BUS}$ zu erhalten. Da die gemessenen Werte als Istwerte in einem Regelkreis verwendet werden, ist es besser, einen Messwert zu verwerfen und nicht zu versuchen $X_{FB}$ nachzujustieren, wenn bezüglich des Messwertes Zweifel an dessen Zuverlässigkeit bestehen. Die nachfolgend beschriebene Methode ist eine von mehreren, die hier Anwendung finden könnte.

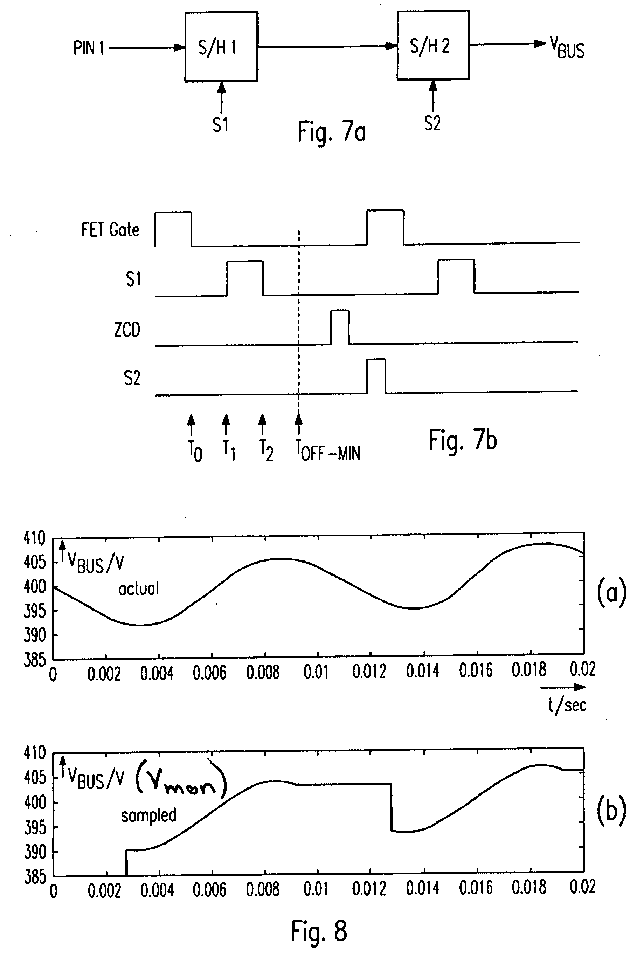

Die Option besteht darin, gemäß **Figur 7** in dem PFC-ASIC zwei in Serie geschaltete Sample & Hold-Schaltungen S/H 1 und S/H 2 einzusetzen. Das Tastimpuls-Signal S1, welches der Schaltung S/H 1 zugeführt wird und sich von $T_1$ bis $T_2$ erstreckt, veranlasst die Schaltung S/H 1, die Spannung $V_{mon}$ zum Zwecke der Ermittlung von $V_{BUS}$ zu einem Zeitpunkt abzutasten, an dem $V_{mon}$ die Ausgangsgleichspannung $V_{BUS}$ auch tatsächlich repräsentiert. In der Simulation wurde für $T_1$ die Zeit von 1μS eingesetzt und für $T_2$ die Zeit von 1,5μS. Wenn das ZCD-Signal vor dem Zeitpunkt $T_{OFF-MIN}$ erscheint, so wird das Messergebnis nicht als zuverlässig betrachtet. Wenn das ZCD-Signal vor dem Zeitpunkt $T_{GATE}$ (nicht eingezeichnet) erschienen wäre, so wäre es nicht berücksichtigt worden. In diesem Fall könnte die Ausschaltzeit $T_{OFF}$ für den FET auf $T_{OFF-MAX}$ (ebenfalls nicht eingezeichnet) verlängert werden, vorausgesetzt, dass weder ein Rauschen oder ein anderes Störsignal, wie beispielsweise Klingeln, an der Drain-Elektrode des FET ein falsches ZCD-Trigger-Signal produziert haben. Ein durch Klingeln an der Drain-Elektrode des FET verursachtes Störsignal wirkt wie eine Vielzahl von falschen ZCD-Trigger-Signalen. Solange wie vor $T_{OFF-MIN}$ ein falsches Trigger-Signal produziert wird, tritt beim Abtasten kein Umkehreffekt auf. Für Klingeln ist es wahrscheinlich, dass falsche ZCD-Trigger-Signale bis $T_{OFF-MIN}$ erzeugt werden. Durch allgemeines Rauschen könnten dagegen überall falsche ZCD-Trigger-Signale erzeugt werden. Wenn ein ZCD-Signal nicht bis $T_{OFF-MIN}$ detektiert wird, aber nach $T_{OFF-MIN}$ erscheint, so wird das Tastimpuls-Signal S2 wirksam, indem das Ausgangssignal der Schaltung S/H 1 von der Schaltung S/H 2 abgetastet wird.

Zur Freigabe des Signals S2 kann ein weiteres Signal $V_{BUS-ENABLE}$ dienen, welches anzeigt, dass die Bedingungen für ein erfolgreiches Abtasten erfüllt worden sind. Bis dieses Signal gesetzt ist, fängt der Regelkreis nicht an zu arbeiten, und $X_{FB}$ sollte auf Null gesetzt werden. $V_{BUS-ENABLE}$ sollte zurückgesetzt werden, wenn eine zuverlässige Messung von $V_{BUS}$ nicht innerhalb von 6-8mS erfolgt ist.

Das Abtasten mit einer ähnlichen Methode, wie der zuvor beschriebenen, führt zu den in **Figur 8** gezeigten Wellenformen. In diesem Fall war die Leistung 10% der Maximalleistung. Die abgetastete Spannung $V_{BUS}$ ist etwa 3mS nach beginn der Operation nicht zuverlässig. Nach diesem Zeitpunkt repräsentiert dieses Signal entweder den aktuellen oder den vorherigen Wert von $V_{BUS}$. Nach etwa 4mS, wenn die Eingangswechselspannung $V_{IN}$ unterhalb eines kritischen Pegels liegt, nimmt die Regelschaltung den zuletzt genommenen Messwert auf. Das ist zweifellos nicht ohne Risiko. Besser wäre es daher die Abtastwerte über einen bestimmten Zeitabschnitt zu mitteln, den Mittelwert als zuverlässig zu betrachten und ihn so im Regelsystem zu verwerten. Damit könnte verhindert werden, dass wenige unzuverlässige Abtastwerte durchgehen und ungewollt im Regelsystem verwertet werden.

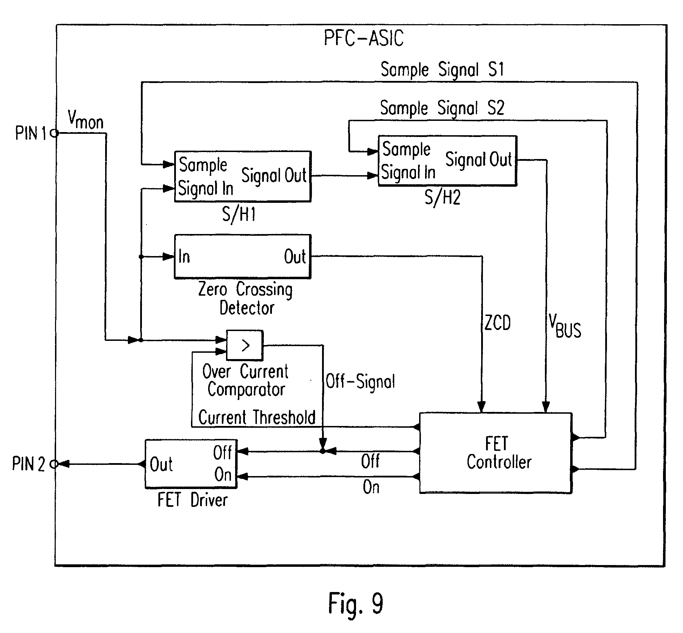

**Figur 9** zeigt, wie ein PFC-ASIC im Prinzip bei Umsetzung der vorstehend erläuterten Erkenntnisse aufgebaut sein könnte. An dem einzigen Überwachungs-PIN 1 liegt die Spannung $V_{mon}$ an. Diese repräsentiert während der Ladephase den durch den FET fließenden Strom $I_{FET}$. Dieser Strom wird dem einen Eingang eines Überstrom-Komparators (Over Current Comparator) zugeführt. Dem anderen Eingang wird von dem FET Controller ein Stromschwellwert-Signal zugeführt. Der Komparator vergleicht die Signale und gibt an den FET Treiber (FET Driver) ein Abschaltsignal für den FET aus, wenn der Stromschwellwert überschritten wird.

$V_{mon}$ wird während der Entladephase ferner mittels zwei in Serie geschalteten Sample & Hold-Schaltungen S/H 1 und S/H 2 ausgewertet, die ihre Abtastimpulse von dem FET-Controller erhalten. Die Arbeitsweise wurde bereits im Zusammenhang mit **Figur 7** beschrieben. Das Ausgangsprodukt von S/H 2 ist die abgetastete Ausgangsgleichspannung $V_{BUS}$. Diese wird dem FET-Controller zugeführt, der sie als Istwert für die Regelung der Ausgangsgleichspannung speichert, so dass sie auch während der Ladephase zur Verfügung steht.

Schließlich wird $V_{mon}$ noch mittels eines ZCD-Detektors (Zero Crossing Detector) ausgewertet, welcher auf den am Ende der Entladephase auftretenden negativen Spannungsknick von $V_{mon}$ reagiert und ein ZCD-Signal erzeugt, welches ebenfalls dem FET-Controller zugeführt wird.

Der FET-Controller verarbeitet die ihm zugeführten Signale und erzeugt daraus - neben den Abtastimpulsen für die die S/H 1 und S/H 2 sowie neben dem Stromschwellwert für den Überstrom-Komparator - ein Einschaltsignal On für den FET, das er dem FET Treiber zuführt. Der FET-Treiber gibt seinerseits die Einschaltsignale On und die Ausschaltsignale Off an den Steuer-PIN 2 weiter, von dem aus der FET geschaltet wird.

Der FET-Controller errechnet aufgrund der ihm zur Verfügung stehenden Informationen, wann der FET am Ende einer Entladephase ggf. mit Verzögerung wieder eingeschaltet werden muss und wann er zur Beendigung einer Ladephase ausgeschaltet werden muss. Er erzeugt dementsprechend Einschaltsignale On und Ausschaltsignale Off, die er dem FET-Treiber zuführt, welcher dann seinerseits den FET über PIN 2 ein- bzw. ausschaltet. Die Berechnung einer möglichen Verzögerung von $T_{OFF}$ erfolgt so, wie dies oben im Zusammenhang mit den **Figuren 3 und 5** erklärt wurde.

Informationen über mögliche Niederlast-Verhältnisse gewinnt der FET-Controller aus der Überwachung von $V_{BUS}$. Die Informationen über die Eingangswechselspannung $V_{IN}$ gewinnt der FET-Controller durch Auswertung von $I_{FET}$ während der Ladephase über die beiden S/H-Schaltungen.

**Patentansprüche**

1. Verfahren zur Leistungsfaktorkorrektur für einen Wechselspannungs-/Gleichspannungs-Wandler,
   bei dem eine Gleichspannung oder gleichgerichtete Eingangswechselspannung ($V_{IN}$) eine Induktivität (L) speist,
   bei dem die Induktivität (L) wiederholt mittels eines getakteten Schalters (FET) durch Schließen und Öffnen desselben ge- und entladen wird,
   bei dem der Entladestrom der Induktivität (L) über eine Diode (D) dem Ausgang des Wandlers zugeführt wird,
   bei dem während der Entladephase eine der Ausgangsgleichspannung $V_{BUS}$ entsprechende Spannung $V_{mon}$ durch Abtastung erfasst wird,
   bei dem ein ZCD-Ereignis festgestellt wird, d.h. der zeitliche Bereich festgestellt wird, zu dem am Ende einer Entladephase der Entladestrom die Nulllinie berührt bzw. kreuzt,
   bei dem unter Auswertung der ermittelten Informationen ($V_{BUS}$ und ZCD) Ein- und Ausschaltsignale für die Taktung des Schalters (FET) erzeugt werden,
   **dadurch gekennzeichnet,**
   **dass** eine bestimmte minimale Ausschaltzeit ($T_{OFF-MIN}$) verwendet wird,
   wobei, wenn ein ZCD-Ereignis vor dem Ablauf der bestimmten minimalen Ausschaltzeit ($T_{OFF-MIN}$) festgestellt wird, ein Wiedereinschalten des Schalters (FET) nach Ablauf der bestimmten minimalen Ausschaltzeit ($T_{OFF-MIN}$) erfolgt, so dass die Ausschaltzeit des Schalters lang genug ist zum Abtasten der Ausgangsgleichspannung $V_{BUS}$, und wobei, wenn kein ZCD-Ereignis vor dem Ablauf der bestimmten minimalen Ausschaltzeit ($T_{OFF-MIN}$) festgestellt wird, ein Wiedereinschalten des Schalters (FET) unverzüglich nach Detektion eines ZCD-Ereignis nach Ablauf der minimalen Ausschaltzeit ($T_{OFF-MIN}$) erfolgt.

2. Verfahren nach Anspruch 1,
   bei dem das Wiedereinschalten des Schalters (FET) nicht später als nach Ablauf einer bestimmten maximalen Ausschaltzeit ($T_{OFF-MAX}$) erfolgt.

3. Verfahren nach Anspruch 1 oder 2,
   bei dem ZCD-Signale und andere vergleichbare Signale, die bis zum Ablauf einer bestimmten Störunterdrückungszeit ($T_{GATE}$) auftreten, bei der Bestimmung der Wiedereinschaltzeit für den Schalter (FET) ignoriert werden, und bei dem die Störunterdrückungszeit ($T_{GATE}$) vor der minimalen Ausschaltzeit ($T_{OFF-MIN}$) abläuft.

4. Verfahren nach Anspruch 3,
   bei dem ZCD-Signale (ZCD1), die nach Ablauf der Störunterdrückungszeit ($T_{GATE}$), aber vor Ablauf der minimalen Ausschaltzeit ($T_{OFF-MIN}$) detektiert werden, ein Wiedereinschalten des Schalters (FET) zum Ablauf der minimalen Ausschaltzeit ($T_{OFF-MIN}$) bewirken.

5. Verfahren nach Anspruch 2,
   bei dem ZCD-Signale (ZCD2), die nach Ablauf der minimalen Ausschaltzeit ($T_{OFF-MIN}$), aber vor Ablauf der maximalen Ausschaltzeit ($T_{OFF-MAX}$) detektiert werden,
   ein unverzügliches Wiedereinschalten des Schalters (FET) bewirken.

6. Verfahren nach Anspruch 2,
   bei dem - wenn bis zum Ablauf der maximalen Ausschaltzeit ($T_{OFF-MAX}$) keine ZCD-Signale detektiert werden - ein Wiedereinschalten des Schalters (FET) zum Ablauf der maximalen Ausschaltzeit ($T_{OFF-MAX}$) erfolgt.

7. Leistungsfaktorkorrektur-Schaltung für einen Wechselspannungs-/Gleichspannungs-Leistungswandler, enthaltend

(a) eine Induktivität (L), die von einer Gleichspannung oder einer gleichgerichteten Eingangswechselspannung ($V_{IN}$) gespeist wird,

(b) einen getakteten Schalter (FET), mittels welchem die Induktivität (L) wiederholt durch Schließen und Öffnen desselben ge- und entladen wird,

(c) eine Diode (D), über die der Entladestrom der Induktivität (L) dem Ausgang des Wandlers zugeführt wird,

(d) Mittel (S/H 1, S/H 2) zum Abtasten einer während der Entladephase der Ausgangsgleichspannung $V_{BUS}$ entsprechenden Spannung $V_{mon}$,

(e) Mittel (Zero Cross Detector) zum Feststellen eines ZCD-Ereignisses, d.h. zum Feststellen des zeitlichen Bereichs, zu dem am Ende einer Entladphase der Entladestron die Nulllinie berührt bzw. kreuzt,

(f) Mittel (FET-Controller) zur Auswertung der ermittelten Informationen ($V_{BUS}$ und ZCD) sowie zur Erzeugung von Ein- und Ausschaltsignalen für die Taktung des Schalters (FET),

(g) und Zeitgeber-Mittel (in FET-Controller), die den Wert für eine bestimmte minimale Ausschaltzeit ($T_{OFF-MIN}$) für das Wiedereinschalten des Schalters (FET) speichern und zur Erzeugung des Taktsignales (On) vorgeben,

**dadurch gekennzeichnet,**
**dass** eine bestimmte minimale Ausschaltzeit ($T_{OFF-MIN}$) vorgegeben ist,
wobei, wenn ein ZCD-Ereignis vor dem Ablauf der bestimmten minimalen Ausschaltzeit ($T_{OFF-MIN}$) festgestellt wird, ein Wiedereinschalten des Schalters (FET) nach Ablauf der bestimmten minimalen Ausschaltzeit ($T_{OFF-MIN}$) erfolgt, so dass die Ausschaltzeit des Schalters lang genug ist zum Abtasten der Ausgangsgleichspannung $V_{BUS}$, und wobei, wenn kein ZCD-Ereignis vor dem Ablauf der bestimmten minimalen Ausschaltzeit ($T_{OFF-MIN}$) festgestellt wird, ein Wiedereinschalten des Schalters (FET) unverzüglich nach Detektion eines ZCD-Ereignis nach Ablauf der minimalen Ausschaltzeit ($T_{OFF-MIN}$) erfolgt.

8. Leistungsfaktorkorrektur-Schaltung nach Anspruch 7, wobei die Zeitgeber-Mittel zusätzlich Werte für eine bestimmte maximale Ausschaltzeit ($T_{OFF-MAX}$) und eine Störunterdrückungszeit ($T_{GATE}$) für das Wiedereinschalten des Schalters (FET) speichern und zur Erzeugung des Taktsignales (On) vorgeben.

9. Leistungsfaktorkorrektur-Schaltung nach Anspruch 7 oder 8,
wobei die Mittel zum Abtasten einer der Ausgangsgleichspannung $V_{BUS}$ entsprechenden Spannung $V_{mon}$ sowie zum Speichern der Abtastwerte von zwei in Serie geschalteten Sample & Hold-Schaltungen (S/H 1, S/H 2) gebildet sind.

10. Leistungsfaktorkorrektur-Schaltung nach einem der Ansprüch 7 bis 9,
weiterhin enthaltend einen Überstrom-Komparator (Over Current Comparator), dessen einem Eingang eine Spannung (Vmon) zugeführt wird, die während der Ladephase den durch den Schalter (FET) fließenden Strom ($I_{FET}$) repräsentiert, dessen anderem Eingang eine Spannung (Current Threshold) zugeführt wird, die einen oberen Schwellenwert für den durch den Schalter (FET) fließenden Strom ($I_{FET}$) repräsentiert, und der ein Ausschaltsignal (Off) für den Schalter (FET) erzeugt, wenn der durch den Schalter (FET) fließende Strom ($I_{FET}$) den Schwellenwert erreicht.

11. Leistungsfaktorkorrektur-Schaltung nach einem der Ansprüch 7 bis 10,
bei der vor der Diode (D) parallel zum Schalter (FET) eine Serienschaltung von zwei Widerständen (R2, R3) liegt, die einen Spannungsteiler bilden,
bei der diese Serienschaltung mit einem Shuntwiderstand (R3) in Serie geschaltet ist, durch den der während der Ladephase durch den Schalter (FET) fließende Strom ($I_{FET}$) geführt ist,
und bei der der Verbindungspunkt der beiden die Serienschaltung bildenden Widerstände (R2, R3) einen gemeinsamen Verbindungspunkt zum Überwachen von
Schaltungsparametern bildet, der mit einer Steuereinheit (PFC) verbunden ist.

12. Leistungsfaktorkorrektur-Schaltung nach Anspruch 11,
bei dem die Steuereinheit (PFC) als ASIC mit nur einem gemeinsamen Überwachungs-PIN (PIN 1) und nur einem Steuer-PIN (PIN2) ausgeführt ist.

13. PFC-ASIC, enthaltend die folgenden Funktionsbausteine

einer Leistungskorrektur-Schaltung nach einem der Ansprüche 7 bis 12

(a) einen FET-Contoller der die ihm zugeführten Signale zur Erzeugung von Ein- und Ausschaltsignalen (On, Off) für den Schalter (FET) verarbeitet und dem Steuer-PIN (PIN 2) zuführt,

(b) eine Serienschaltung von zwei Sample & Hold-Schaltungen (S/H 1, S/H2), wobei der Eingang der ersten (S/H 1) mit dem Überwachungs-PIN (PIN 1) verbunden ist, und wobei der Ausgang der zweiten (S/H 2) mit dem FET-Controller verbunden ist,

(c) einen ZCD-Detektor (Zero Crossing Detector), dessen Eingang ebenfalls mit dem Überwachungs-PIN (PIN 1) verbunden ist, und dessen Ausgang ebenfalls mit dem FET-Controller verbunden ist,

(d) und einen überstrom-Komparator (Over Current Comparator), dessen ein Eingang ebenfalls mit dem Überwachungs-PIN (PIN 1) verbunden ist, dessen anderer Eingang mit dem FET-Controller zwecks Aufnahme eines Schwellenwertes für den durch den Schalter (FET) fließenden Strom ($I_{FET}$) verbunden ist, und an dessen Ausgang ein Ausschaltsignal (Off) für den Schalter (FET) erzeugt, wenn der durch den Schalter fließende Strom den Schwellenwert erreicht.

14. Betriebsgerät für Leuchtmittel, aufweisend eine Leistungsfaktorkorrektur-Schaltung nach einem der Ansprüche 7 bis 12 und/oder ein PFC-ASIC nach Anspruch 13.

15. Leuchte, aufweisend ein Betriebsgerät nach Anspruch 14 sowie ein oder mehrere angeschlossene Leuchtmittel, wie Gasentladungslampen, LEDs oder OLEDs.


**Claims**

1. A method for correcting the power factor for an alternating current/direct current power transformer,
in which a direct current voltage or rectified AC input voltage ($V_{IN}$) feeds an inductance (L),
in which the inductance (L) is repeatedly charged and discharged by means of a clocked switch (FET) by closure and opening the same,
in which the discharge current of the inductance (L) is fed to the output of the transformer via a diode (D),
in which during the discharge phase a voltage $V_{MON}$ corresponding to the DC output voltage $V_{BUS}$ is detected by scanning,
in which a ZCD event is detected, i.e., the temporal area is detected, at which the discharge current reaches or crosses the zero line at the end of discharge phase,
in which switch-on and switch-off signals for pulsing the switch (FET) are generated by evaluation of the information ($V_{BUS}$ and ZCD),
**characterized in**
**that** a specific minimum switch-off time ($T_{OFF-MIN}$) is used,
in which, if a ZCD-event is detected before the expiration of the specific minimum switch-off time ($T_{OFF-MIN}$), a switching-on again of the switch (FET) occurs after expiration of the specific minimum switch-off time ($T_{OFF-MIN}$),
so that the switch-off time of the switch is long enough for the scanning of the DC output voltage $V_{BUS}$, and
wherein, if no ZCD-event is detected before the expiration of the specific minimum switch-off time ($T_{OFF-MIN}$), a switching-on again of the switch (FET) immediately occurs after detection of a ZDC-event after expiration of the specific minimum switch-off time ($T_{OFF-}$MIN).

2. A method according to Claim 1
in which the switching-on again of the switch (FET) occurs no later than after expiration of a specific maximum switch-off time ($T_{OFF-MAX}$).

3. A method according to Claim 1 or 2,
in which ZCD-signals and other comparable signals, which occur up to the expiration of a specific interference suppression time ($T_{GATE}$), are ignored during the determination of the switching-on again time for the switch (FET), and in which the interference suppression time ($T_{GATE}$) expires before the minimum switch-off time ($T_{OFF-MIN}$).

4. A method according to Claim 3,
in which ZCD-signals (ZCD1), which are detected after expiration of the interference suppression time ($T_{GATE}$), but before expiration of the minimum switch-off time ($T_{OFF-MIN}$), cause a switching-on again of the switch (FET) at the expiration of the minimum switch-off time ($T_{OFF-MIN}$).

**5.** A method according to Claim 2,
in which ZCD-signals (ZCD2), which are detected after expiration of the minimum switch-off time ($T_{OFF-MIN}$), but before expiration of the maximum switch-off time ($T_{OFF-MAX}$), cause an immediate switching-on again of the switch (FET).

**6.** A method according to claim 2,
in which - if no ZCD-signals are detected by the expiration of the maximum switch-off time ($T_{OFF-MAX}$) - a switching-on again of the switch (FET) occurs at the expiration of the maximum switch-off time ($T_{OFF-MAX}$).

**7.** A circuit for correcting a power factor for an AC voltage-/DC voltage power transformer, containing

(a) an inductance (L), which is fed by a DC voltage or a rectified AC input voltage ($V_{IN}$),
(b) a clocked switch (FET), by means of which the inductance (L) is repeatedly charged and discharged by closure and opening of the same,
(c) a diode (D), via which the discharge current of the inductance (L) is fed to the output of the transformer,
(d) means (S/H 1, S/H 2) for scanning a voltage $V_{MON}$ corresponding to the DC output voltage $V_{BUS}$ during the discharge phase,
(e) means (Zero Cross Detector) for detecting a ZCD-event, i.e., for the detection of the temporal area, at which the discharge current reaches or crosses the zero line at the end of discharge phase,
(f) means (FET-controller) for evaluating the determined information ($V_{BUS}$ and ZCD), as well as for generating switch-on and switch-off signals for pulsing the switch (FET),
(g) and time-emitter means (in FET-controller), which store the value for a specific minimum switch-off time ($T_{OFF-MIN}$) for the switching-on again of the switch (FET) and for generating the clock pulse (On),

**characterized in**
**that** a specific minimum switch-off time ($T_{OFF-MIN}$) is specified,
wherein, if a ZCD-event is detected before the expiration of the specific minimum switch-off time ($T_{OFF-MIN}$), a switching-on again of the switch (FET) occurs after expiration of the specific minimum switch-off time ($T_{OFF-MIN}$), so that the switch-off time of the switch is long enough for the scanning of the DC output voltage $V_{BUS}$,
and wherein, if no ZCD-event is detected before the expiration of the specific minimum switch-off time ($T_{OFF-MIN}$), a switching-on again of the switch (FET) immediately occurs after detection of a ZDC-event after expiration of the specific minimum switch-off time ($T_{OFF-MIN}$).

**8.** A circuit for correcting a power factor according to Claim 7,
wherein the time-emitter means additionally store values for a specific maximum switch-off time ($T_{OFF-MAX}$) and a disturbance suppression time ($T_{GATE}$) for the switching-on again of the switch (FET) and specify values for generating the clock pulse (On).

**9.** A circuit for correcting a power factor according to Claim 7 or 8,
wherein the means for scanning a voltage $V_{MON}$ corresponding to the DC output voltage $V_{BUS}$ as well as for storing the scan results are formed by two sample & hold circuits (S/H 1, S/H 2) connected in series.

**10.** A circuit for correcting a power factor according one of Claims 7 to 9,
also containing an over current comparator, an input of which is fed a voltage ($V_{MON}$), which during the charging phase represents the current ($I_{FET}$) flowing through the switch (FET), another input of which is fed a voltage (current threshold), which represents an upper threshold value for the current ($I_{FET}$) flowing through the switch (FET), and which generates a switch-off signal (off) for the switch (FET), if the current ($I_{FET}$) flowing through the switch (FET) reaches the threshold value.

**11.** A circuit for correcting a power factor according one of Claims 7 to 10,
in which a series connection of two resistors (R2, R3), which form a voltage divider, is located before the diode (D) parallel to the switch (FET),
in which said series connection is connected with a shunt resistor (R3) in series, through which the current ($I_{FET}$) flowing through the switch (FET) during the charging phase is guided,
and in which the connection point of the two resistors (R2, R3) forming the series connection forms a common connection point for monitoring circuit parameters, which is connected with a control unit (PFC).

**12.** A circuit for correcting a power factor according to claim 11,

in which the control unit (PFC) is designed as an ASIC with only one common monitoring-PIN (PIN 1) and only one control-PIN (PIN2).

**13.** a PFC-ASIC, containing the following functional components of a circuit for correcting a power factor according to one of Claims 7 to 12

(a) a FET-controller which processes the signals fed to it for the generation of switch-on and switch-off signals (On, Off) for the switch (FET) and feeds said signals to the control-Pin (PIN 2),

(b) a series connection of two sample & hold-circuits (S/H 1, S/H2), wherein the input of the first (S/H 1) is connected with the monitoring-PIN (PIN 1), and wherein the output of the second (S/H 2) is connected with the FET-controller,

(c) a ZCD-detector (Zero Crossing Detector), the input of which is also connected with the monitoring-PIN (PIN 1), and the output of which is also connected with the FET-controller,

(d) and an over current comparator, one input of which is also connected with the monitoring-PIN (PIN 1), the other input of which is connected with the FET-controller for the purpose of recording a threshold value for the current ($I_{FET}$) flowing through the switch (FET), and at the output of which generates a switch-off signal (Off) for the switch (FET), if the current flowing through the switch reaches the threshold value.

**14.** An operating device for lamps, having a circuit for correcting a power factor according to one of Claims 7 to 12 and/or a PFC-ASIC according to Claim 13.

**15.** A light, having an operating device according to Claim 14 as well as one or more connected lamps, such as gas-discharge lamps, LEDs or OLEDs.

**Revendications**

**1.** Procédé de correction de facteur de puissance pour un convertisseur tension alternative-tension continue, dans lequel une tension continue ou une tension alternative d'entrée redressée ($V_{IN}$) alimente une inductance (L),

dans lequel l'inductance (L) est chargé et déchargé de manière répétée au moyen d'un commutateur cadencé (FET) par fermeture et ouverture de celui-ci, dans lequel le courant de décharge de l'inductance (L) est appliqué par l'intermédiaire d'une diode (D) à l'entrée du convertisseur,

dans lequel, pendant la phase de décharge, une tension $V_{mon}$ correspondant à la tension continue de sortie $V_{BUS}$ est mesurée par balayage,

dans lequel un événement ZCD est détecté, c'est à dire que l'intervalle temporel est détecté, dans lequel, à la fin d'une phase de décharge, le courant de décharge entre en contact ou croise la ligne zéro,

dans lequel, en analysant les informations déterminées ($V_{BUS}$ et ZCD), des signaux de mise en marche et d'arrêt pour le cadencement du commutateur (FET) sont générés,

**caractérisé en ce que**

un temps d'arrêt minimal déterminé ($T_{OFF-MIN}$) est utilisé,

moyennant quoi, lorsqu'un événement ZCD est détecté avant l'écoulement du temps d'arrêt minimal déterminé ($T_{OFF-MIN}$), une remise en marche du commutateur (FET) a lieu après l'écoulement du temps d'arrêt minimal déterminé ($T_{OFF-MIN}$), de façon à ce que le temps d'arrêt du commutateur soit suffisamment long pour le balayage de la tension continue de sortie $V_{BUS}$,

et moyennant quoi, lorsque aucun événement ZCD n'est détecté avant l'écoulement du temps d'arrêt minimal déterminé ($T_{OFF-MIN}$), une remise en marche du commutateur (FET) a lieu immédiatement après la détection d'un événement ZCD après l'écoulement du temps d'arrêt minimal ($T_{OFF-MIN}$).

**2.** Procédé selon la revendication 1,

dans lequel la remise en marche du commutateur (FET) a lieu pas plus tard qu'après l'écoulement d'un temps d'arrêt maximal ($T_{OFF-MAX}$).

**3.** Procédé selon la revendication 1 ou 2,

dans lequel des signaux ZCD et d'autres signaux comparables, qui surviennent après l'écoulement d'un temps d'atténuation des parasites déterminé ($T_{GATE}$), sont ignorés lors de la détermination du temps de remise en marche pour le commutateur (FET),

et dans lequel le temps d'atténuation des parasites ($T_{GATE}$) s'écoule avant le temps d'arrêt minimal ($T_{OFF-MIN}$).

**4.** Procédé selon la revendication 3,
dans lequel les signaux ZCD (ZCD1), qui sont détectés après l'écoulement du temps d'atténuation des parasites ($T_{GATE}$), mais après l'écoulement du temps d'arrêt minimal ($T_{OFF-MIN}$), provoquent une remise en marche du commutateur (FET) à l'écoulement du temps d'arrêt minimal ($T_{OFF-MIN}$).

**5.** Procédé selon la revendication 2,
dans lequel les signaux ZCD (ZCD2), qui sont détectés après l'écoulement du temps d'arrêt minimal ($T_{OFF-MIN}$), mais avant l'écoulement du temps d'arrêt maximal ($T_{OFF-MAX}$), provoquent une remise en marche immédiate du commutateur (FET).

**6.** Procédé selon la revendication 2,
dans lequel, lorsque, jusqu'à l'écoulement du temps d'arrêt maximal ($T_{OFF-MAX}$), aucun signal ZCD n'est détecté, une remise en marche du commutateur a lieu à l'écoulement du temps d'arrêt maximal ($T_{OFF-MAX}$).

**7.** Circuit de correction de facteur de puissance pour un convertisseur de puissance tension alternative - tension continue, comprenant :

a) une inductance (L), qui est alimentée par une tension continue ou une tension alternative d'entrée redressée ($V_{IN}$),
b) un commutateur cadencé (FET), à l'aide duquel l'inductance (L) est chargée et déchargée de manière répétée par fermeture et ouverture de celui-ci,
c) une diode (D), par l'intermédiaire de laquelle le courant de décharge de l'inductance (L) est appliqué à la sortie du convertisseur,
d) des moyens (S/H 1, S/H 2) pour le balayage d'une tension $V_{mon}$ correspondant à la tension continue de sortie $V_{BUS}$ pendant la phase de décharge,
e) des moyens (Zero Cross Detector) pour la détection d'un événement ZCD, c'est à dire pour la détection de l'intervalle temporel, auquel, à la fin d'une phase de décharge, le courant de décharge touche ou croise la ligne zéro,
f) des moyens (contrôleur FET) pour l'analyse des informations déterminées ($V_{BUS}$ et ZCD) ainsi que pour la génération de signaux de mise en marche et d'arrêt pour le cadencement du commutateur (FET),
g) et des moyens de temporisation (dans le contrôleur FET), qui stockent la valeur pour un temps d'arrêt minimal déterminé ($T_{OFF-MIN}$) pour la remise en marche du commutateur (FET) et pour la génération du signal de cadencement (On), **caractérisé en ce que**
un temps d'arrêt minimal déterminé ($T_{OFF-MIN}$) est prédéterminé,
moyennant quoi, lorsqu'un événement ZCD est détecté avant l'écoulement du temps d'arrêt minimal déterminé ($T_{OFF-MIN}$), une remise en marche du commutateur (FET) a lieu après l'écoulement du temps d'arrêt minimal déterminé ($T_{OFF-MIN}$), de façon à ce que le temps d'arrêt du commutateur soit suffisamment long pour le balayage de la tension continue de sortie $V_{BUS}$,
et moyennant quoi, lorsque aucun événement ZCD n'est détecté avant l'écoulement du temps d'arrêt minimal déterminé ($T_{OFF-MIN}$), une remise en marche du commutateur (FET) a lieu immédiatement après détection d'un événement ZCD après l'écoulement du temps d'arrêt minimal ($T_{OFF-MIN}$).

**8.** Circuit de correction de facteur de puissance selon la revendication 7,
les moyens de temporisation stockent en outre des valeurs pour un temps d'arrêt maximal déterminé ($T_{OFF-MAX}$) et un temps d'atténuation de parasites ($T_{GATE}$) pour la remise en marche du commutateur (FET) et les prescrivent pour la génération du signal de cadencement (On).

**9.** Circuit de correction de facteur de puissance selon la revendication 7 ou 8,
les moyens de balayage d'une tension $V_{mon}$ correspondant à la tension continue de sortie $V_{BUS}$ ainsi que pour le stockage des valeurs de balayage étant constitués de deux circuits Sample&Hold (S/H 1, S/H 2) branchés en série.

**10.** Circuit de correction de facteur de puissance selon l'une des revendications 7 à 9,
comprenant en outre un comparateur de surcourant (Over Current Comparator) dont une entrée est alimentée par une tension ($V_{mon}$), qui représente, pendant la phase de charge, le courant ($I_{FET}$) s'écoulant à travers le commutateur (FET), dont l'autre entrée est alimentée par une tension (Current Threshold), qui représente une valeur seuil supérieure pour le courant ($I_{FET}$) s'écoulant à travers le commutateur (FET) et qui génère un signal d'arrêt (Off) pour le commutateur (FET), lorsque le courant ($I_{FET}$) s'écoulant à travers le commutateur (FET) atteint la valeur seuil.

**11.** Circuit de correction de facteur de puissance selon l'une des revendications 7 à 10,
dans lequel, avant la diode (D), parallèle au commutateur (FET), se trouve un branchement en série de deux résistances (R2, R3), qui constituent un diviseur de tension,
dans lequel ce branchement en série est branché en série avec une résistance de shunt (R3), grâce à laquelle le courant ($I_{FET}$) s'écoulant à travers le commutateur (FET) est guidé pendant la phase de charge,
et dans lequel le point de liaison des deux résistances (R2, R3) constituant le branchement en série constitue un point de liaison commun pour la surveillance des paramètres du branchement, qui est relié avec une unité de commande (PFC).

**12.** Circuit de correction de facteur de puissance selon la revendication 11, dans lequel l'unité de commande (PFC) est conçue sous la forme d'un ASIC avec uniquement une branche de surveillance commune (PIN 1) et uniquement une broche de commande (PIN 2).

**13.** PFC-ASIC comprenant les composants fonctionnels suivants d'un circuit de correction de facteur de puissance selon l'une des revendications 7 à 12 :

a) un contrôleur FET qui traite les signaux qui lui sont envoyés pour la génération de signaux de mise en marche et d'arrêt (On, Off) pour le commutateur (FET) et les envoie à la broche de commande (PIN 2),
b) un branchement en série de deux circuits Sample&Hold (S/H 1, S/H 2), l'entrée du premier (S/H 1) étant relié avec la broche de surveillance (PIN 1) et la sortie du deuxième (S/H 2) étant relié avec le contrôleur FET,
c) un détecteur ZCD (Zéro Cross Detector), dont l'entrée est également reliée avec la broche de surveillance (PIN 1) et dont la sortie est également reliée avec le contrôleur FET,
d) et un comparateur de surcourant (Over Current Comparator) dont une entrée est également reliée avec la broche de surveillance (PIN 1), dont l'autre entrée est reliée avec le contrôleur FET pour l'enregistrement d'une valeur seuil pour le courant ($I_{FET}$) s'écoulant à travers le commutateur (FET) et à la sortie duquel un signal d'arrêt (Off) pour le commutateur (FET) est généré lorsque le courant s'écoulant à travers le commutateur atteint la valeur seuil.

**14.** Appareil d'exploitation pour moyens d'éclairage, comprenant un circuit de correction de facteur de puissance selon l'une des revendications 7 à 12 et/ou un PFC-ASIC selon la revendication 13.

**15.** Luminaires comprenant un appareil d'exploitation selon la revendication 14 ainsi qu'un ou plusieurs moyens d'éclairage connectés, comme des lampes à décharge de gaz, des LED ou des OLED.

Fig. 1

Fig. 2

Phase Netzhalbwelle

Fig. 3

Fig. 5

Fig. 4(a)

Fig. 4(b)

Fig. 4(c)

Fig. 6

Fig. 7a

Fig. 7b

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004025597 A1